# EUROPEAN PATENT APPLICATION

(11) **EP 1 002 667 A1**
(43) Date of publication of application: **24.05.2000**
(21) Application number: 98120472.0
(22) Date of filing: 29.10.1998
(51) Int. Cl.: B60C 15/02, B60C 3/06, B60C 19/00, B60B 21/02

(54) **Asymmetric pneumatic tire**

(71) Applicant: PIRELLI PNEUMATICI Società per Azioni, 20126 Milano (IT)
(72) Inventor: Cesarini, Riccardo, 24100 Bergamo (IT); Vismara, Ivano, 20017 Rho (MI) (IT)
(74) Representative: Guella, Paolo

(57) **Abstract**

An asymmetric tire to provide improved handling and comfort of a vehicle, having one sidewall of greater height and smaller bead radius than the other sidewall. The sidewall with the smaller bead radius is mounted facing the vehicle.

## Description

### BACKGROUND OF THE INVENTION

### Field of the Invention

The present invention relates to a tire having improved performance, and more particularly to a high performance pneumatic tire designed for improved handling and comfort.

### Description of Related Art

Tires provide the connection between a vehicle and the surface on which the vehicle is traveling. Consequently, the design and characteristics of the tire determine to a great extent how the vehicle handles and performs when turning, accelerating, and braking. Several design parameters of tires, such as tread pattern, construction materials, stiffness, and dimensions of the tread and sidewall, have a strong effect on the road handling characteristics of the vehicle. In recent years, the trend in high performance tires has been towards using low aspect ratio tires that give good handling characteristics and good cornering performance to the vehicle.

A typical tire comprises a tread band, which is the circumferential portion of the tire in rolling contact with the ground, and two sidewalls extending radially from the lateral edges of the tread band towards the axis of rotation of the tire. Each sidewall ends in a circumferential bead that is forced against the respective bead seat of the rim by the air pressure inside the tire, so that the tire is securely mounted onto the rim. The aspect ratio of the tire is defined as the percentage ratio of the section height, over the section width of the tire. Low aspect ratio tires have a comparatively wide tread band, and comparatively low sidewalls. High aspect ratio tires, on the other hand, have sidewalls that are high in proportion to the width of the tread band. Aspect ratio is also commonly referred to as the "profile" of a tire.

Low aspect ratio tires are generally associated with good handling characteristics, because their relatively short sidewalls tend to flex less than the sidewalls of greater height found in high profile tires. The shorter sidewalls can better resist the deformation due to the cornering forces generated when the vehicle takes high speed or sharp turns. To maintain an acceptable outer diameter of the wheel, low aspect ratio tires are typically mounted on rims of large diameter, which for production cars often measure 15-20 inches in diameter.

There is a limit, however, with respect to how low the aspect ratio of tires may be tolerated. If the aspect ratio is too low, the height of the sidewalls becomes so small that the tire is unsuitable for use on passenger vehicles. The short sidewalls make the tire very stiff in the vertical direction and unable to absorb road irregularities, causing a very stiff and uncomfortable ride for the passengers. The excessive stiffness also makes it more likely that the sidewall will be damaged or destroyed when the tire is used over rough surfaces. Also, an excessive vertical stiffness of the tire results in a reduction in the area of the tire tread band which is in actual contact with the ground, generally referred to as the tire contact patch or footprint. This contact patch reduction is especially evident when the vehicle travels in a straight path, as will be explained below.

The suspension of a vehicle is designed to maintain the largest possible surface of the tire tread band in contact with the ground at all times, so that traction and handling performance are maximized. In a turn, the weight of the vehicle shifts towards the outside of the turn as a result of the centrifugal force acting on the body mass of the vehicle, and the tires mounted on that side of the vehicle are subject to the largest loads imposed by the cornering forces during the turn. As a result, the tires on the outside of the turn are twisted so that the tread bands in contact with the pavement are pushed towards the vehicle. When that occurs, the part of the tread band near the inside sidewall, facing the vehicle, tends to be lifted off the pavement, while the part of the tread band near the outer sidewall is forced into even greater contact with the pavement. In extreme cases, the outer sidewall itself can be rolled over and rub against the pavement.

To counter this effect, the suspension is built with a negative camber angle at rest, meaning that the wheels of the vehicle are placed at an angle from vertical when the vehicle is at rest or moving on a straight path, so that each tire has its top edge closer to the vehicle centerline than the bottom edge. The camber angle is measured between the equatorial plane of a tire and a vertical line, as viewed from the front. The equatorial plane is a plane perpendicular to the tire axis of rotation, and passing through the mid points of the tread band, around the tire circumference. The camber angle is negative when the equatorial plane converges with the vehicle centeriine above the tire, and positive when it converges below the tire.

The negative camber of the suspension helps to place as much of the tread band as possible on the road in a turn, for the tires on the outside of the turn, since the initial effect of the cornering force is to twist the tire to undo the effect of the negative camber, and only then further twisting can bring about rollover of the outer sidewall. However, when the vehicle is not turning, the negative camber tends to tilt the outer edge of the tread band up and away from the pavement, while shifting the vehicle weight to the inner portion of the tread band. If the tire is too stiff, this configuration prevents the entire width of the tread band from being in contact with the ground when the vehicle is not in a turn. The resulting contact patch of the tire is reduced and distorted, since the inner portion of the tread band is in increased contact with the ground, but the outer portion of the tread band is lifted away from the ground.

Up to now, the problem of maximizing the contact patch of the tire, both during turning and during straight line operation, has been addressed by achieving a compromise between the camber angle used in the suspension of the vehicles and the stiffness of the tires used.

Several approaches have also been attempted for tires having sidewalls of different lengths. For example, U.S. Patent 3,842,882 describes a tire having sidewalls of two different sizes, to be mounted on a rim having the inner bead seat of a different diameter than the outer bead seat. In this design, the inner bead seat facing the vehicle is of larger diameter than the outer bead seat, so that a larger volume is available where to locate the brakes.

None of the conventional art solutions, however, allow construction of a tire that provides good handling characteristics, smooth and comfortable operation, and solves the problems associated with the effect of the camber angle of the suspension on tire contact patch.

### SUMMARY OF THE INVENTION

There are thus three requirements that a tire mounted on a vehicle must satisfy for optimal performance. The first requirement is to provide a comfortable and smooth ride for the passengers of the vehicle. A second requirement is to react to cornering forces and resist tire sidewall rollover in such a manner that the vehicle has good handling characteristics. The third requirement is to have the largest possible contact patch of rubber in contact with the ground, both while driving in a straight path and in turns.

Applicants have noted that in order to obtain a smooth and comfortable ride, the tire construction must provide low vertical stiffness. Vertical stiffness is the resistance of the tire to deformation in a direction along the radius of the wheel. In general, tires of low aspect ratio tend to have stiff sidewalls that do not deform very much, and therefore tend to have a high vertical stiffness which results in a harsh and uncomfortable ride.

The handling characteristics of the tire, and its resistance to cornering forces and rollover, are determined to a great extent by the lateral stiffness of the tire. The lateral stiffness of the tire is related to the ability of the tire to resist movement of the portion of tread band in contact with the ground, in a direction parallel to the axis of rotation of the tire. Under heavy cornering loads, the tread band tends to be pushed by the centrifugal force acting on the vehicle towards the center of the turn. The more this tendency to deform the tire is resisted by the sidewalls, the better are the handling characteristics of the tire. Low aspect ratio tires tend to have higher lateral stiffness than normal aspect ratio tires, but in this case, high lateral stiffness is desirable.

An ideal tire should thus have high lateral stiffness to resist sidewall rollover and at the same time low vertical stiffness to absorb road irregularities. In the present invention, this result is obtained by constructing a tire with the inner sidewall of greater height than the outer sidewall. The inner sidewall faces the vehicle when the tire is mounted on the wheel, while the outer sidewall faces away from the vehicle. The asymmetry of the sidewalls can be quantified by comparing the diameter of the inner bead, attached to the edge of the inner sidewall, to the diameter of the outer bead, attached to the edge of the outer sidewall. This type of asymmetric tire is mounted on a rim that also has different diameters for the inner and outer bead seat, to match the tire bead diameters. To obtain the desired performance and comfort, the tire must be mounted so that the larger sidewall with the smaller bead diameter faces the vehicle, while the smaller sidewall with the larger bead diameter faces away from the vehicle.

According to the invention, the vertical stiffness and horizontal stiffness of the tire are de-coupled so that good handling characteristics can be obtained while maintaining a smooth and comfortable ride. As will be explained later, this design also results in a smaller negative camber angle setting of the suspension, while maximizing the contact patch of the tire in all conditions.

One aspect of the invention is thus a tire with an asymmetrical cross section for mounting on an asymmetric rim, the rim having an inner surface of smaller diameter facing the vehicle, and an outer surface of larger diameter facing away from the vehicle. The tire has a tread band with inner and outer edges, an inner sidewall extending from the inner edge of the tread band, and an outer sidewall extending from the outer edge of the tread band. An inner bead is disposed at the end of the inner sidewall opposite the tread band and defines an inner bead diameter, while an outer bead is disposed at the corresponding end of the outer sidewall and defines an outer bead diameter which is greater than the inner bead diameter. This allows a vertical and lateral stiffness of the tire to be controllable independently of each other.

Upon inflation of the tire, the tread band shifts towards the vehicle in a direction substantially parallel to the axis of rotation of the tire, so that a preload of the tire is generated.

In another aspect, the invention is a pneumatic tire for use on a vehicle, having an inner sidewall facing the vehicle when the tire is in use, and an outer sidewall facing away from the vehicle when the tire is in use. The tire also has means for preloading the tire by shifting the tread band towards the vehicle upon tire inflation to reduce the camber angle required to maximize the tread band contact patch. The means for preloading the tire include an inner bead at the end of the larger inner sidewall and an outer bead at the end of the smaller outer sidewall, the outer bead defining a greater bead diameter than the bead diameter defined by the inner bead.

In yet another aspect, the invention is a pneumatic tire for mounting on a vehicle having a tread band contacting the road, an inner sidewall facing the vehicle when mounted, an outer sidewall facing opposite to the vehicle when mounted. The tire also includes means for separately defining a vertical stiffness and a lateral stiffness of the tire. The means for defining vertical and lateral stiffness include an inner bead at the end of the larger inner sidewall, and an outer bead at the end of the smaller outer sidewall, the outer bead defining a greater diameter than the diameter defined by the inner bead.

In another aspect, the invention is a wheel for use in a vehicle, having a rim for mounting on the vehicle and a pneumatic tire for mounting on the rim. When mounted on the vehicle, the tire has an inner bead placed on the surface of the tire facing the vehicle, and an outer bead on the surface of the tire facing away from the vehicle. The inner and outer beads engage respectively the inner and outer bead seats of the rim. The inner bead has a smaller diameter than the outer bead, and the inner bead seat has a smaller diameter than the outer bead seat.

In a further aspect, the invention is a method for increasing the contact patch area of a tire used in a vehicle, which includes forming a tire with an inner bead having a smaller diameter than an outer bead, and forming a rim having an inner bead seat of smaller diameter than an outer bead seat. The tire is mounted on the rim so that the inner bead engages the inner bead seat, and the outer bead engages the outer bead seat. The rim is then mounted on the vehicle, so that the inner bead seat faces the vehicle.

It is to be understood that both the foregoing general description and the following detailed description of the invention are exemplary and explanatory and are intended to provide further explanation of the invention as claimed.

### BRIEF DESCRIPTION OF THE DRAWINGS

The accompanying drawings are included to provide further understanding of the invention and are incorporated in and constitute part of the specification, illustrate one embodiment of the invention, and together with the description serve to explain the principles of the invention. In the drawings:

Fig. 1 is a cross section showing a tire mounted on a wheel according to one embodiment of the invention.

Fig. 2 is a top view of a tire mounted on the suspension of a vehicle.

Fig. 2a is a front view of the tire of Fig. 2 showing the camber angle.

Fig. 3 is a cross section showing the deformation of a tire under a centripetal force caused by cornering.

Fig. 4 is a cross-section of a tire according to one embodiment of the invention, showing the pre-loading of an asymmetric tire during inflation.

Fig. 5 is a graph of vertical displacement against loading for an asymmetric 18"/19" diameter tire.

Fig. 6 is a graph of lateral displacement against loading for an asymmetric 18"/19" diameter tire.

Fig. 7 show tire contact patches for an asymmetric 18"/19" diameter tire.

Fig. 8 is a graph of vertical displacement against loading for a 19" diameter tire.

Fig. 9 is a graph of lateral displacement against loading for a 19" diameter tire.

Fig. 10 show tire contact patches for a 19" diameter tire.

### DESCRIPTION OF THE PREFERRED EMBODIMENTS

Reference will now be made in detail to the present preferred embodiments of the invention, examples of which are described in the accompanying specification and illustrated in the accompanying drawings. While the present invention can be broadly applied to the field of tires, it is especially well suited for use in pneumatic tires having a low profile, more preferably provided with radial carcass, and used in high performance vehicles and in racing vehicles.

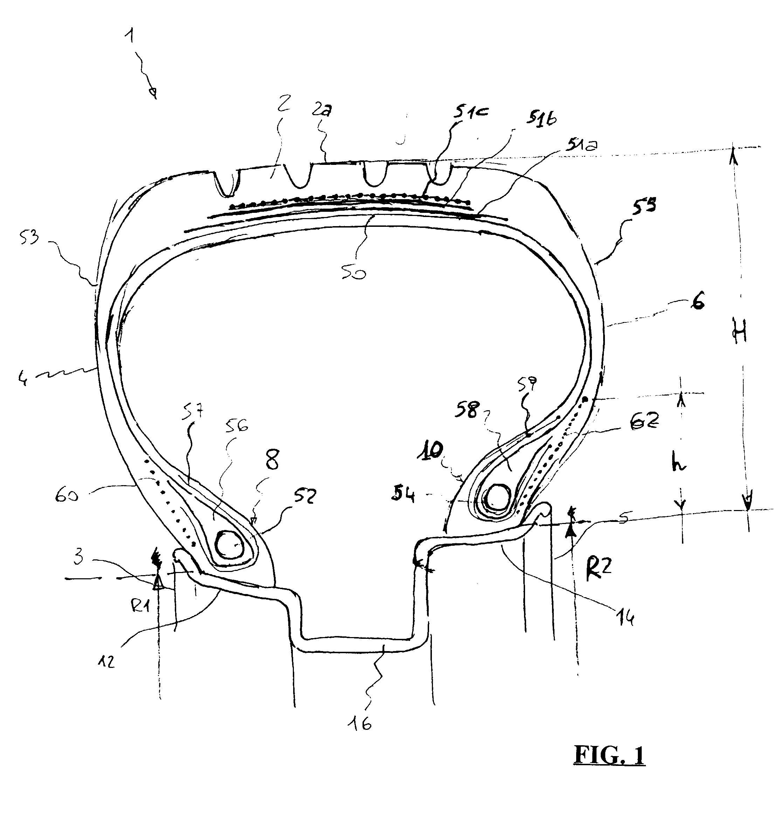

Fig. 1 is a cross section showing a tire according to one embodiment of the invention, mounted on a rim to constitute the wheel of a vehicle.

Tire 1 comprises at least one carcass ply 50, the opposite side edges of which are folded up around corresponding anchoring bead cores 52, 54, each incorporated in a bead 8, 10, that is the radially inner ends of said tire, and having the function of enabling the tire assembling with the corresponding mounting rim 16. Elastomeric fillers 56, 58 are respectively applied to the bead cores 52, 54, at a radially external position thereof, said fillers occupying the space defined between the carcass ply 50 and the respective turn up of the same.

Applied to the carcass ply 50, along the circumferential extension thereof, one or more belt layers 51a, 51b, 51c, made of textile or metal cords incorporated in a rubberized sheet, are placed. Usually, the belt layers are three: the first two 51a, 51b, near to the carcass ply 50, are made of rubberized fabric comprising cords, preferably metallic cords, that crisscross each other and are both angled with respect to the equatorial plane of the tire. Over the two metallic belt layers 51a, 51b a layer of rubberized fabric 51c is placed, said fabric containing reinforcing cords, preferably of a textile material, and more preferably of a heat-shrinkable material, such as nylon, oriented at 0° (i.e., in a circumferential direction) with respect to the equatorial plane of the tire.

A tread band 2 is circumferentially disposed around the belt layers 51a, 51b, 51c. The tread band 2 externally exhibits a rolling surface 2a, arranged to act in contact relationship with the ground, in which thickness a tread pattern is provided, usually comprising circumferential grooves, alternating with transverse cut-outs. Said grooves define a plurality of ribs or blocks distributed in one or more circumferential or transversal rows.

An inner sidewall 4 is attached to an edge of the tread 2, at the so-called "shoulder" region 53, extends towards the axis of rotation of the wheel, and ends in the inner bead 8. An outer sidewall 6 also extends from another edge of the tread 2, at the shoulder region 55, in a direction towards the axis of rotation of the tire, and ends in the outer bead 10. Inner bead 8 is circular in shape and has a radius R1 measured from the axis of rotation of the tire. Outer bead 10 has a radius R2 which is also measured from the axis of rotation of the tire. According to the invention, inner bead radius R1 is smaller than outer bead radius R2, so that the inner sidewall 4 has a greater height than outer sidewall 6.

In a preferred embodiment, the outer bead diameter ranges from 15" to 21", and the inner bead diameter ranges from 14" to 19". In a more preferred embodiment, the outer bead diameter ranges between 18" and 19", while the inner bead diameter ranges between 17" and 18". A preferred difference between the inner and outer bead diameters is between 1" and 3".

Beads 8 and 10 are anchored respectively on inner bead seat 12 and on outer bead seat 14 of a rim 16. The rim 16 has an inner face 3 and an outer face 5, the inner face being oriented towards the vehicle when the wheel is mounted, while the outer face 5 faces away from the vehicle. According to the invention, outer bead seat 14 has a greater diameter than inner bead seat 12, and both seats are sized so that the inner bead 8 and outer bead 10 securely anchor on the respective bead seats of the rim when the tire is inflated.

As said, inner sidewall 4 has a greater height than outer sidewall 6, and for that reason tends to be less stiff, particularly in the vertical direction. In fact, the vertical stiffness of the sidewall is closely related to the height of the same. The higher the sidewall is, the more it tends to behave like an ideal elastic membrane, and the more flexible it is in the vertical direction.

In an embodiment, according to the present invention, at least one of the beads is provided with a flipper (57, 59), surrounding the corresponding bead core (52, 54) and bead filler (56, 58), said flipper being made from a rubberized fabric comprising reinforcing cords of any suitable material, preferably of a textile material. Said reinforcing cords are accomplished in the fabric in such a manner that they form, with respect to a radial direction of the tire, an angle preferably comprised between 25° and 60°; more preferably, said angle is comprised between 35° and 50°; even more preferably, said angle is comprised between 40° and 45°. Advantageously, the radial height of the inner skirt of the flipper (57, 59) is greater than the radial height of the outer skirt thereof.

Still according to the present invention, in addition to the flippers 57, 59 or in alternative, reinforcing elements 60, 62 are arranged in an axially external position with respect to at least one of the bead cores 52, 54, i.e. externally to the turned-up portion of the carcass ply 50 and to the flippers 57, 59, if present. Such reinforcing elements are made from a rubberized fabric comprising cords of any suitable material, preferably metallic material. Said cords are accomplished in the fabric in such a manner that they form, with respect to a radial direction of the tire, an angle preferably comprised between 0° and 60°; more preferably, said angle is comprised between 10° and 50°; even more preferably, said angle is comprised between 15° and 25°. Preferably, the radially external end of the reinforcing elements has a height h which does not exceed the 50% of the section height H on the corresponding sidewall; more preferably, said end has a height h comprised between the 15% and the 35% of the section height H on the corresponding sidewall.

The elements as the flippers 57, 59 and the reinforcing elements 60, 62 may be equal in material and displacement for both the beads 8, 10. However, in order of improving or differentiating the performances of the two sidewalls of the tire, according the present invention, they may be made from material having different characteristics and/or different displacement for both beads. For example, in order to increase the stiffness of the outer sidewall, both the flipper and the reinforcing element could be placed only on the outer bead.

Also the sidewalls 4, 6 may be equal (in composition or structure) or different in the case a further difference performance between the two sidewalls is preferred. For example, it is possible use for the two sidewalls of different compounds or different thickness, having, in this way, different characteristics.

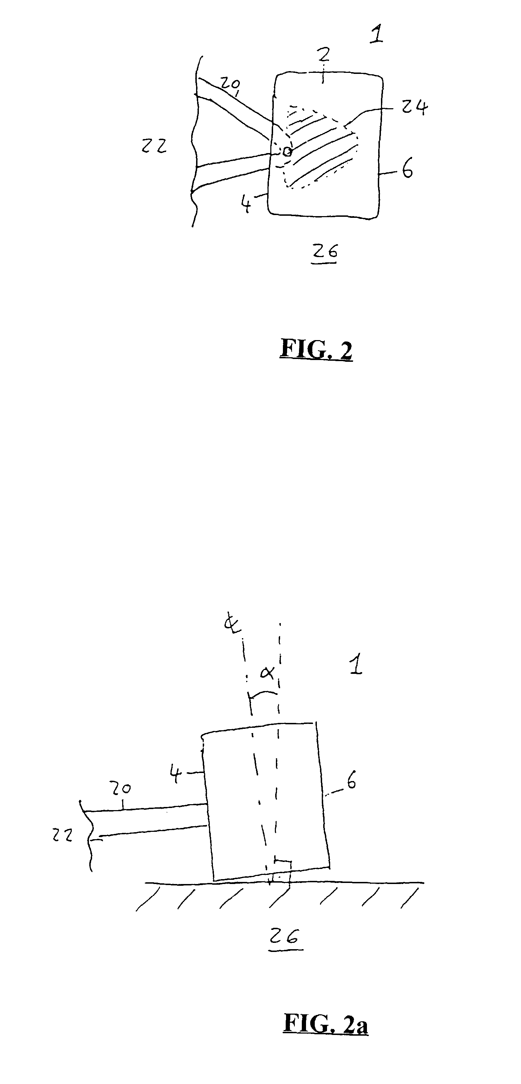

Fig. 2 shows a tire 1 mounted on a suspension 20 of a vehicle 22. The tread band 2 of the tire is in contact with the ground 26, and the area of contact between the tread band 2 and the ground is indicated by the cross hatched area 24. In this Figure, the vehicle is at rest or is traveling in a straight path. The area of contact 24 is not oval and symmetric because, as will be explained later, when the vehicle moves in a straight line the suspension keeps the outer edge of the tire tilted upward, so that the plane of rotation of the tire is not perpendicular to the ground. Fig. 2A shows this angle represented by α, which is also called the camber angle of the suspension. Negative camber angle is needed to ensure maximum contact of tires with the ground during hard cornering of the vehicle, in particular of high performance or racing tires. When high performance or racing tires are used, the negative camber angle range of the suspension is generally between 30 minutes and 5 degrees.

The stiffness of the tire has two components. One is the stiffness due to the structure of the tire, or structural stiffness. Another component is due to the pressurized air inflating the tire, the so called pneumatic stiffness. The total stiffness of the tire results from summing the structural and pneumatic components.

If we concentrate our attention on the structural stiffness of the tire, we find that the vertical loads absorbed by the suspension and by the tire are carried mostly through the inner sidewall 4 of the tire. That is because when the vehicle travels in a straight line, the negative camber angle of the suspension keeps the tire rolling predominantly on the inner portion of the tread band. The outer sidewall 6 of the tire carries the vertical loads to a much lesser extent. It is for this reason that the inner sidewall 4, which according to this embodiment of the invention is less stiff than the outer sidewall 6, carries most of the vertical loads and can provide the tire with a better ride than is possible in an equivalent conventional symmetric tire.

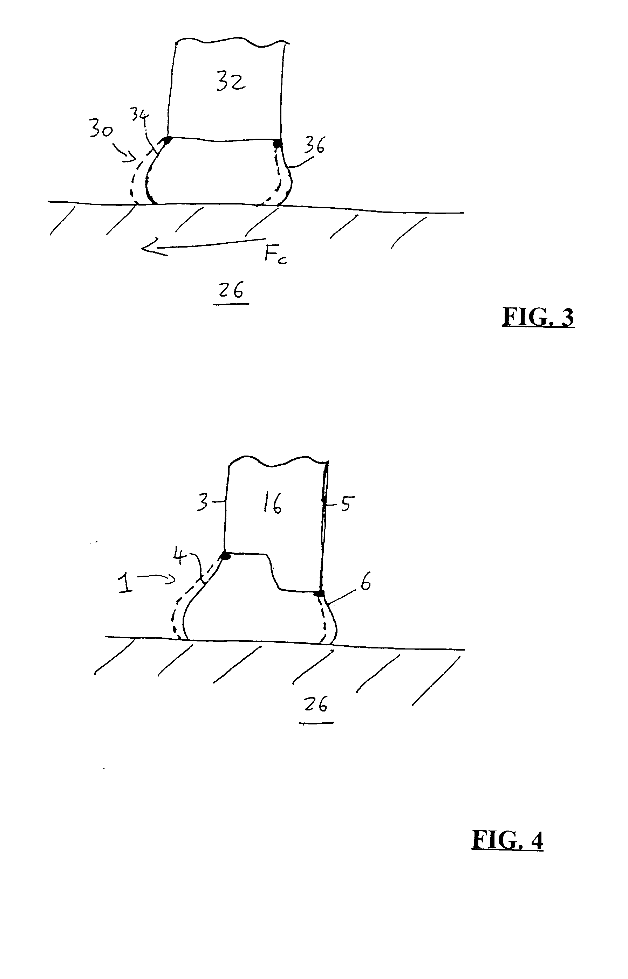

Referring to Fig. 3, a conventional tire 30 is mounted on a symmetric rim 32, and is subject to a centripetal force Fc which is generated by friction with the pavement in a turn. Force Fc tends to push the tread band of the tire towards the inside of the turn, when the tire is mounted on the outside of the turn. The dashed lines indicate the shape taken by the sidewalls of the tire under this centripetal force. As can be seen, outer sidewall 36 tends to be rolled over in the turn, and rubs against the pavement. Conversely, the portion of the tread band near inner sidewall 34 tends to be lifted off from the road, and does not contribute much to turning the vehicle. To counter this distortion of the tire in a turn, the suspension system is set to a negative camber angle to tilt the plane of rotation of the tire so that, in straight line operation, the tread band portion nearest the vehicle is forced against the pavement more than the opposite portion of the tread band. Essentially, the effect of the negative camber is to tilt the tire on the outside of a turn in a direction opposite to the twisting caused by cornering forces. Thus, when the tire mounted on the outside of a turn is subjected to cornering forces, the rollover effect on outer sidewall 36 is partially countered, and more of the tread band remains in contact with the ground during the turn.

However, as shown in Fig. 2A, the negative camber angle results in the outer edge of the tread band being slightly lifted off from the ground when the vehicle moves in a straight line. The contact area 24 of the tread band with the road, or tire contact patch, is concentrated near the inner sidewall where most of the weight is carried, and less tread band contacts the ground towards the outer sidewall, where little weight is carried. It can be seen therefore that a negative camber helps to maximize the contact patch of the tire during a turn, but tends to reduce and deform the contact patch when the vehicle is moving in a straight line. This is particularly the case when the tire has stiff sidewalls, as in low aspect ratio tires, because the sidewalls do not flex so much to let the tread band follow the contour of the pavement.

In operation, the tire according to the present invention minimizes the negative camber of the suspension required to reduce tire rollover in a turn, while taking advantage of the remaining negative camber angle to separately control vertical and horizontal tire stiffness. When the tire of the present invention is operated in a straight line, the reduced negative camber angle of the suspension puts a greater portion of the vertical loads on the inner sidewall 4 of the tire. Since inner sidewall 4 is less stiff, the tire provides a comfortable and smooth ride. When the vehicle negotiates a turn, most of the weight of the car shifts to the outside of the turn, and the tires on the outside of the turn are subjected to the highest loads. The tread of those tires tends to be pushed by centripetal forces towards the center of the turn. In a tire according to the present invention, the stiffer outer sidewall 6 tends to prevent this movement of the tread 2, contributing to improved handling characteristics of the tire. In a tire according to this invention, the softer inner sidewall provides a smooth and comfortable ride, while the stiffer outer sidewall provides good cornering and handling characteristics of the tire.

When tires according to the invention are mounted on a vehicle, the negative camber angle of the suspension can be reduced, for example, by between 30 minutes and 3 degrees, and preferably between 30 minutes and 2 degrees, from the camber setting required if conventional tires are used.

Another advantage of the tire according to the invention is illustrated in Fig. 4. Tire 4 is mounted on rim 16 which has an inner face 3 and an outer face 5. Inner sidewall 4 is softer and has a greater height than outer sidewall 6. The dashed lines in the drawing show the shape that the inner and outer sidewalls of the tire 1 take as the inflation pressure of the tire is increased.

This is due to the fact that the inner sidewall 4 has a greater surface area component perpendicular to the tire axis of rotation than the outer sidewall 6. Therefore, the uniform pressure inside the inflated tire creates an unbalanced force pushing the sidewalls and tread towards the sidewall of larger surface. As a result of this force, a preload is applied to the tire, in the same direction as would be experienced by a tire mounted on the outside of a turn under the centripetal force due to cornering. This preload therefore tends to resist the deformation of the tire due to the centripetal force generated during hard cornering, and further improves the handling characteristics of the tire.

In addition, since the tire according to the present invention experiences less deformation during cornering and is less subject to rollover, the negative camber angle of the suspension system can be reduced. When a tire according to the invention is mounted, the reduction in negative camber angle of the suspension does not reduce the handling performance of the tire, because a large tire contact patch is still in contact with the ground during cornering. The contact patch of the tire in straight line operation is also increased, because the outer portion of a tread band is not angled away from the ground as much as is necessary when conventional tires are used.

Thus all objectives of the invention are achieved. The tire according to the invention has a preload that, combined with the different dimension of the sidewalls, reduces the negative camber angle required to maximize the tire contact patch in a turn, so that the contact patch is also increased when operating in a straight path. The tire according to the invention also utilizes the reduced camber angle and an inner sidewall that is less stiff and higher than the outer sidewall, to increase lateral stiffness of the tire while reducing vertical stiffness.

Tests were conducted to compare the vertical deflection, lateral deflection, and contact patch of a conventional tire of 19 inches bead diameter with an asymmetric sidewall tire according to the invention, having an inner bead diameter of 18 inches and an outer bead diameter of 19 inches.

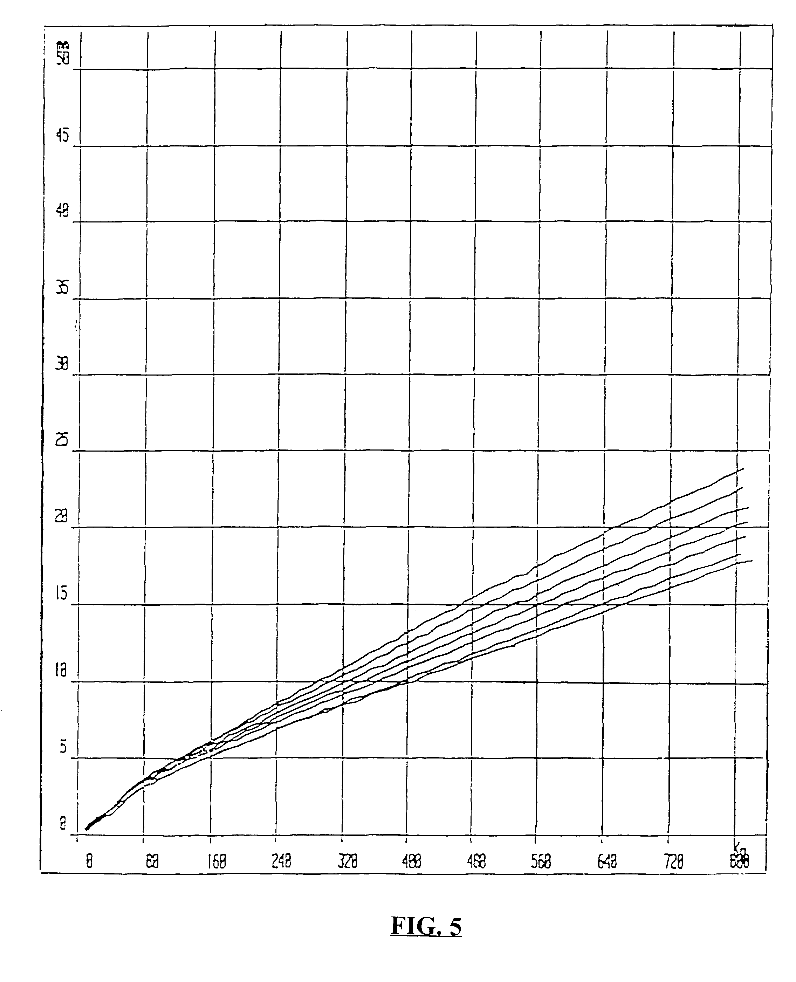

Figs. 5, 6, 8, and 9 show vertical and lateral deflections for both tires. The deflections in millimeters are shown in the Y axis, and the load applied, in kilograms, is shown on the X axis. The multiple curves in the vertical deflection graphs indicate different inflation pressures of the tire, from 1.6 to 2.8 bar, step 0.2 bar. The multiple curves in the lateral deflection graphs show different vertical loadings (350, 250, 150 Kg) carried by the tire.

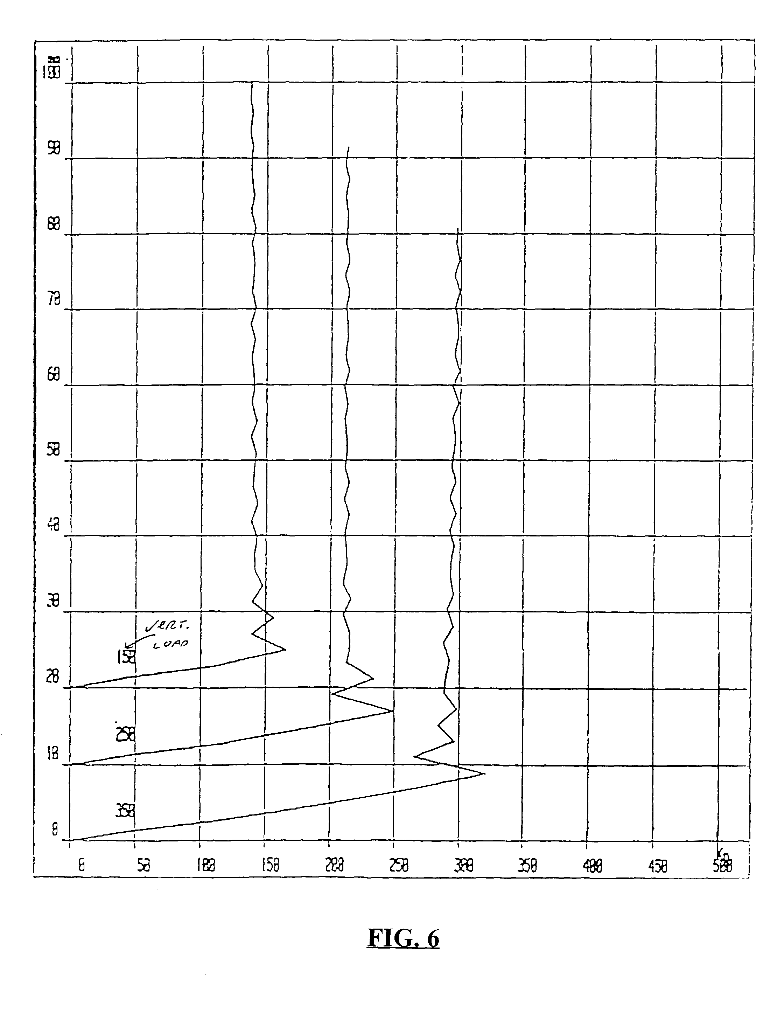

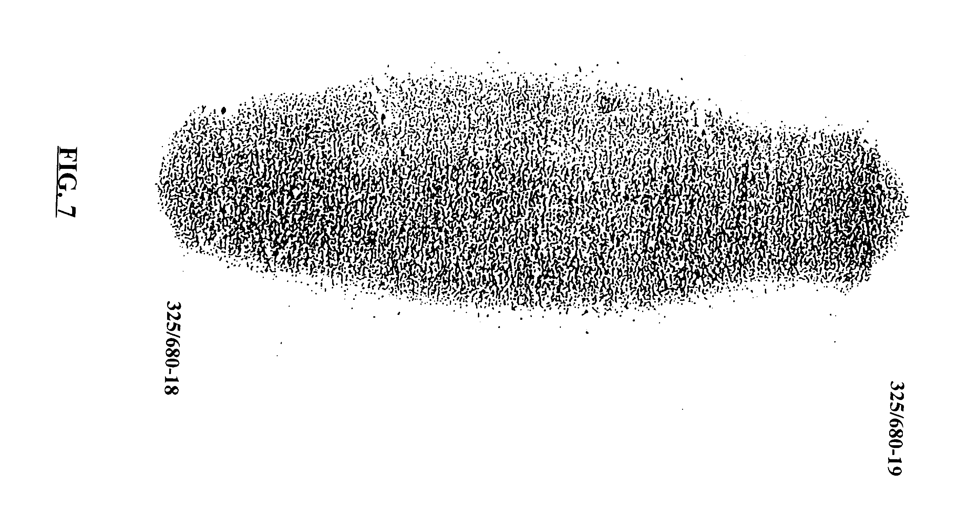

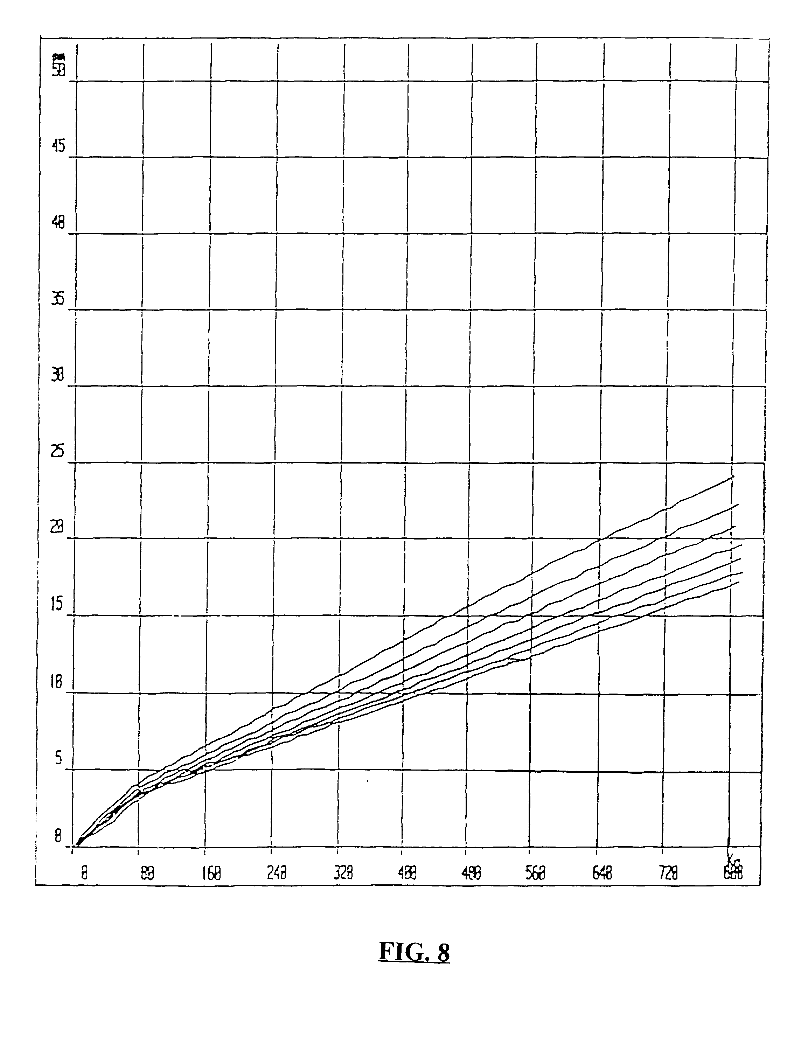

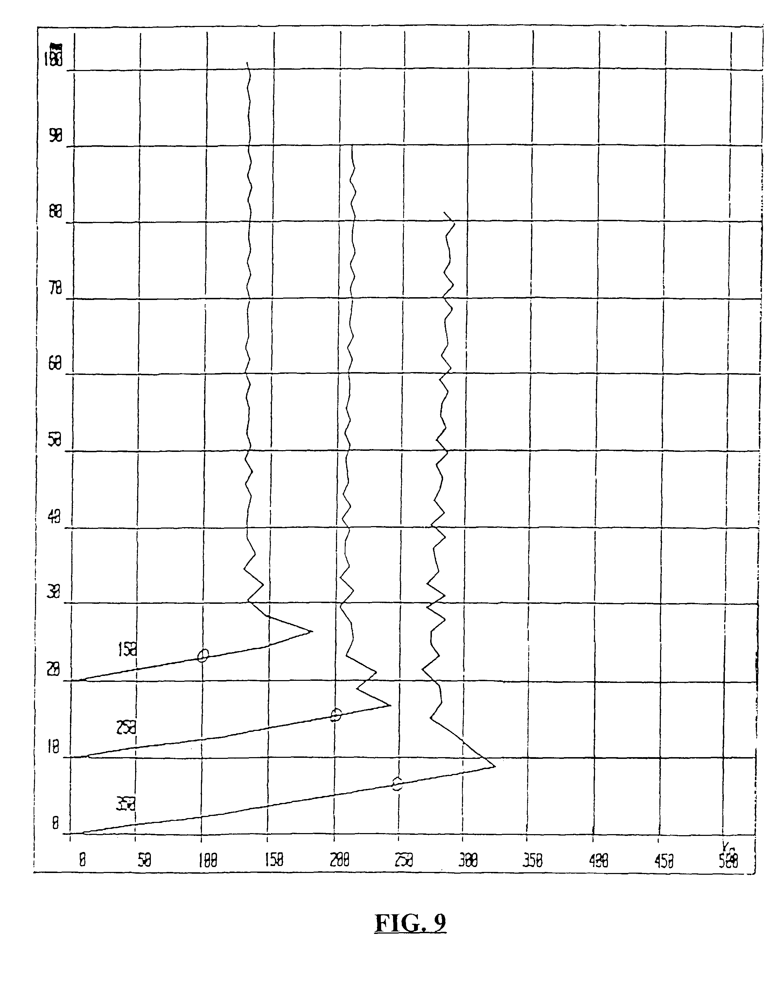

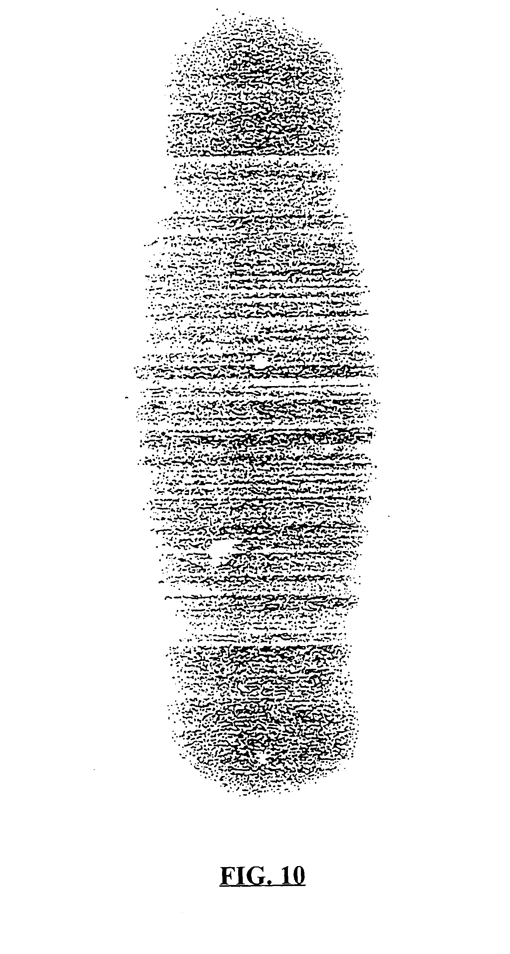

Fig. 7 and Fig. 10 show the tire contact patch of a conventional tire and of a tire made according to the invention, carrying a vertical loads of 500 Kg and using camber settings of 0 degrees. The image of the contact patch is oriented so that the width of the tread band, in the direction of the axis of rotation, is shown on the Y axis, while the extent of the contact patch in the direction of rolling is shown on the X axis. As can be seen by comparing the tire contact patches shown in the figures, the asymmetric sidewall tire made according to the invention has wider and more defined contact patches. At the same time, as can be seen by comparing the graphs of Figs. 6 and 9, there is no substantial difference in the lateral deflection characteristics of the conventional and asymmetric sidewall tire. In addition, Figs. 5 and 8 show that there is a small increasing in the vertical flexibility for the asymmetrical tire, in particular on operating pressure of 2.0 bar.

Thus, the tests performed show that the asymmetric sidewall tire according to the present invention achieves a greater contact patch, under different conditions, than a comparable conventional tire. Moreover, this increase in contact patch area is obtained without any deterioration of vertical and lateral deflection performance for the asymmetric sidewall tire.

It will be apparent to those skilled in the art that there are modifications and variations that can be made in the structure of the present invention, without departing from the spirit or scope of the invention. Thus, it is intended that the present invention covers the modifications and variations of this invention provided they come within the scope of the appended claims and their equivalents.

## Claims

1. A wheel for use in a vehicle, comprising:
a rim for mounting on the vehicle, comprising an inner surface facing towards the vehicle and an outer surface facing away from the vehicle; and
a pneumatic tire for mounting on the rim, comprising an inner bead engaging an inner bead seat disposed on the inner surface of the rim, and an outer bead engaging an outer bead seat disposed on the outer surface of the rim;
the inner bead having a diameter smaller than the diameter of the outer bead, and the inner bead seat having a diameter smaller than the diameter of the outer bead seat.

2. A wheel according to claim 1, wherein the pneumatic tire further comprises an inner sidewall and an outer sidewall, the inner sidewall having a greater surface area that the outer sidewall.

3. The wheel according to claim 1, wherein the difference between the outer bead diameter and the inner bead diameter provides higher lateral stiffness than vertical stiffness of the pneumatic tire.

4. The wheel according to claim 1, wherein the difference between the outer bead diameter and the inner bead diameter is between 1 and 3 inches.

5. The wheel according to claim 1, wherein the difference between the outer bead seat diameter and the inner bead seat diameter is between 1 and 3 inches.

6. An asymmetric pneumatic tire for mounting on an asymmetric rim of a vehicle wheel, having an inner surface facing the vehicle and an outer surface facing away from the vehicle, comprising:
a tread band having inner and outer edges;
an inner sidewall extending from the inner edge of the tread band;
an outer sidewall extending from the outer edge of the tread band;
an inner bead disposed at an end of the inner sidewall, defining an inner bead diameter; and
an outer bead disposed at an end of the outer sidewall, defining an outer bead diameter greater than the inner bead diameter;
wherein the inner and outer bead diameters are dimensioned to independently control a vertical stiffness and a lateral stiffness of the tire.

7. The tire according to claim 6, wherein a surface area of the inner sidewall is greater than a surface area of the outer sidewall.

8. The tire according to claim 6, wherein the tread band shifts towards the vehicle upon inflation of the tire, in a direction substantially parallel to a tire axis of rotation, thereby pre-loading the tire.

9. The tire according to claim 8, wherein the pre-load is proportional to a difference between the inner bead diameter and the outer bead diameter.

10. The tire according to claim 6, wherein a difference between of the outer bead diameter and the inner bead diameter provides higher lateral stiffness than vertical stiffness.

11. The tire according to claim 10, wherein the difference between of the outer bead diameter and the inner bead diameter is between 1" and 3".

12. The tire according to claim 6, wherein a camber angle is between 30 minutes and 3 degrees.

13. The tire according to claim 6, wherein the inner bead diameter is between 16" and 19", and the outer bead diameter is between 15" and 21".

14. A pneumatic tire for use in a vehicle, comprising:
a inner sidewall facing the vehicle when the tire is in use;
an outer sidewall facing opposite to the vehicle when the tire is in use;
a tread band connecting the inner and outer sidewall;
wherein the inner sidewall extends further towards an axis of rotation of the tire than the outer sidewall; and
the inner sidewall surface area is greater than the outer sidewall surface area.

15. A pneumatic tire for use in a vehicle, comprising:
a tread band contacting a road surface;
a inner sidewall facing the vehicle when the tire is in use;
an outer sidewall facing opposite to the vehicle when the tire is in use;
means for pre-loading the tire by shifting the tread band towards the vehicle upon tire inflation to reduce a camber angle required to maximize tread band contact patch.

17. The tire of claim 16, wherein the means for pre-loading the tire comprise:
an inner bead at an end of the inner sidewall;
an outer bead at an end of the outer sidewall, the outer bead defining a greater bead diameter than the bead diameter defined by the inner bead.

18. A pneumatic tire for use in a vehicle, comprising:
a tread band contacting a road surface;
a inner sidewall facing the vehicle when the tire is in use;
an outer sidewall facing opposite to the vehicle when the tire is in use;
means for separately defining a vertical stiffness and a lateral stiffness of the tire.

19. The tire of claim 18, wherein the means for separately defining the vertica! stiffness and the lateral stiffness of the tire comprise:
an inner bead at an end of the inner sidewall;
an outer bead at an end of the outer sidewall, the outer bead defining a greater bead diameter than the bead diameter defined by the inner bead.

20. A method for increasing a contact patch area of a tire for use in a vehicle, comprising:
forming a tire comprising an inner bead and an outer bead, the inner bead having a smaller diameter than the outer bead;
forming a rim comprising an inner bead seat and an outer bead seat, the inner bead seat having a smaller diameter than the outer bead seat;
mounting the tire on the rim, so that the inner bead engages the inner bead seat, and the outer bead engages the outer bead seat; and
mounting the rim on the vehicle, so that the inner bead seat faces the vehicle.

21. The method of claim 20, further comprising:
adjusting a camber angle of the rim mounted on the vehicle, to maximize the contact patch area of the tire in straight line operation and in a turn.
